# EUROPÄISCHE PATENTSCHRIFT

(11) **EP 3 658 976 B1**
(45) Veröffentlichungstag und Bekanntmachung des Hinweises auf die Patenterteilung: **30.08.2023**
(21) Anmeldenummer: 18745895.5
(22) Anmeldetag: 23.07.2018
(51) Int. Cl.: G02B 27/01, G02B 27/00, G01C 21/36, B60R 1/00, G06F 3/01

(54) **VERFAHREN ZUM BEREITSTELLEN EINER ANZEIGE IN EINEM KRAFTFAHRZEUG, SOWIE KRAFTFAHRZEUG**
METHOD FOR PROVIDING A DISPLAY IN A MOTOR VEHICLE, AND MOTOR VEHICLE
PROCÉDÉ DE FOURNITURE D'UN AFFICHAGE DANS UN VÉHICULE À MOTEUR, ET VÉHICULE À MOTEUR

(30) Priorität: 24.07.2017 DE 102017116702
(43) Veröffentlichungstag der Anmeldung: 03.06.2020
(73) Patentinhaber: SMR Patents Sarl, 2453 Luxembourg (LU)
(72) Erfinder: MÜLLER, Nils Arne, 70327 Stuttgart (DE); HERRMANN, Andreas, 70327 Stuttgart (DE)
(74) Vertreter: Weber-Bruls, Dorothée
(86) Internationale Anmeldenummer: PCT/EP2018/069913
(87) Internationale Veröffentlichungsnummer: WO 2019/020564

(56) Entgegenhaltungen:
- EP-A1- 2 511 750
- WO-A1-03/005102
- DE-A1-102014 208 740
- DE-A1-102015 015 676

## Beschreibung

Die Erfindung betrifft ein Verfahren zum Bereitstellen einer Anzeige in einem Kraftfahrzeug sowie ein Kraftfahrzeug, in dem das Verfahren eingesetzt wird.

Die DE 10 2012 216 057 A1 beschreibt ein Head-mounted Display, welches Informationen, beispielsweise über lokale Geschwindigkeitsbeschränkungen, in einem Anzeigefeld bereitstellt. Es wird die Blickrichtung des Fahrzeugführers erfasst und gegebenenfalls das Anzeigefeld für die Information verschoben, wenn selbiges den freien Blick stören würde.

Die DE 10 2015 015 676 A1 offenbart das Anzeigen eines Bildes einer Verkehrsampel auf einer gesonderten Anzeigeeinrichtung eines Kraftfahrzeuges, wenn sich aufgrund der Blickrichtung des Fahrers ergibt, dass dieser die Ampel sonst nicht sieht.

Die WO 2003/005102 A1 offenbart ein Head-Up Display System zur Darstellung eines Objekts eines Fahrzeugaußenraums mit Mitteln zur Erfassung einer Position eines Insassen des Fahrzeugs und Mitteln zur ortskorrekten Darstellung des Objekts in Bezug auf die Fahrerposition. Von besonderem Vorteil ist die Anwendung des erfindungsgemäßen Head-Up Display Systems für Navigationssysteme und automatische Cruise Control Systeme.

Für die Handhabung von Produktions- und Werkzeugmaschinen ist es aus der DE 101 08 064 A1 bekannt, anhand einer mit einem Eye-Tracking- System erfassten Augenposition eines Benutzers Informationen zu einem Objekt visuell bereitzustellen, welches der Benutzer gemäß der erfassten Augenposition gerade betrachtet.

Es ist die Aufgabe der Erfindung, einen Weg aufzuzeigen, wie die Insassen eines Kraftfahrzeugs durch Einrichtungen des Fahrzeugs in erhöhtem Maße darin unterstützt werden, Informationen über die Umgebung aufzunehmen.

Die Aufgabe wird durch ein Verfahren mit den Merkmalen gemäß Patentanspruch 1 und ein Kraftfahrzeug mit den Merkmalen gemäß Patentanspruch 7 gelöst.

Das erfindungsgemäße Verfahren umfasst somit die folgenden Schritte:
a) Bestimmen der Position des Kraftfahrzeuges;
b) Ermitteln von zumindest einem Landschaftsobjekt oder Objekt in einer Siedlung als ein nicht für den Straßenverkehr relevanten Objekt als Objekt in einer Landschaft in der Umgebung des Kraftfahrzeuges, in Abhängigkeit von der bestimmten Position, und Ermitteln von zumindest einem für den Straßenverkehr relevanten Objekt, wie ein Verkehrszeichen, eine Ampel oder dergleichen;
c) Erfassen zumindest der Blickrichtung eines Beifahrers sowie der Blickrichtung des Kraftfahrzeugführers als Insassen des Kraftfahrzeuges; und
d) Bereitstellen einer Anzeige mit Information zu dem zumindest einen vom Beifahrer betrachteten Objekt in der Landschaft derart, dass sie in dem durch die Blickrichtung definierten direkten Blickfeld des Beifahrers an derselben Stelle wie das Objekt bereitgestellt wird, wobei die Bereitstellung der Anzeige in Abhängigkeit davon erfolgt, ob der Kraftfahrzeugführer in der Lage ist, das für den Straßenverkehr relevante Objekt selbst zu sehen.

Dem Insassen wird somit eine für ihn interessante Information besonders intuitiv zur Verfügung gestellt, da er seine Blickrichtung nicht ändern muss, um die Information aufnehmen zu können. Der Beifahrer als Insasse bezeichnet hierbei den Nichtfahrer in einem Kraftfahrzeug. Der Fahrer ist dagegen nur die Peron, die aktive das Kraftfahrzeug fährt. Beim autonomen Fahren bezeichnet der Begriff "Nichtfahrer" auch die Person, die zwar auf dem Fahrersitz sitzt, aber aufgrund eines autonom fahrenden Kraftfahrzeugs beim Fahren nicht aktiv eingreifen muss und somit ein Nichtfahrer ist. Somit sind in einem autonom fahrenden Kraftfahrzeug alle Insassen Nichtfahrer und damit Beifahrer im Sinne dieser Anmeldung.

In Schritt c) kann auch erfasst werden, ob der Kraftfahrzeugführer in der Lage ist, das Objekt unmittelbar zu sehen.

Demnach kann dem von dem Objekt wegblickenden Fahrer selbiges an anderer Stelle angezeigt werden; es kann aber auch bedeuten, dass das Objekt verdeckt ist - wie das Kraftfahrzeug etwa mithilfe einer Kamera oder einer Radareinrichtung erfasst -, und dass dem Fahrer dann gleichwohl die fehlende Information zur Verfügung gestellt wird.

Ferner ist es erfindungsgemäß bevorzugt, dass in Schritt b) zumindest ein nicht für den Straßenverkehr relevantes Objekt, wie ein Objekt in der Landschaft, eine Sehenswürdigkeit oder dergleichen, ermittelt wird, in Schritt c) zumindest die Blickrichtung eines Insassen ermittelt wird, und das Bereitstellen der Anzeige in Schritt d) Informationen zu dem Objekt, insbesondere in Form einer Textanzeige, enthält. In diesem Aspekt ist das Verfahren in besonderem Maße für einen Beifahrer oder sonstigen vom Kraftfahrzeugführer verschiedenen Insassen geeignet. Es stellt nämlich für einen Betrachter der Umgebung nützliche und hilfreiche Information zur Verfügung. Demnach kann als der Insasse ein Beifahrer ausgewählt werden, oder bei Erfassung eines autonomen Fahrens des Fahrzeugs kann als Insasse auch der Kraftfahrzeugführer und/oder der Beifahrer ausgewählt werden.

Es ist zudem nach der Erfindung vorgesehen, dass die mit der Anzeige bereitgestellten Informationen geändert oder angepasst werden können an den Insassen, vorzugsweise selbstlernend. Ort, Dauer und/oder Art, insbesondere bestimmt durch Größe, Farbe, Leuchtkraft, Kontrast und/oder Geometrie, der Anzeige kann dabei beim Bereitstellen geändert oder angepasst werden.

Ein erfindungsgemäßes Kraftfahrzeug ist bereitgestellt mit einer Positionserfassungseinrichtung zum Erfassen einer Position des Kraftfahrzeugs, insbesondere in Form einer Einrichtung mit einem Global Positioning System (GPS), einer Objekterfassungseinrichtung zum Ermitteln von zumindest einem Landschaftsobjekt oder Objekt in einer Siedlung als ein nicht für den Straßenverkehr relevanten Objekt als Objekt in einer Landschaft in der Umgebung des Kraftfahrzeuges und Ermitteln von zumindest einem für den Straßenverkehr relevanten Objekt, wie ein Verkehrszeichen (20), eine Ampel oder dergleichen in Form zumindest einer Kamera, eines LIDAR- Systems, eines Radargeräts oder dergleichen, einer Datenverarbeitungseinrichtung, die ausgelegt ist, erfassten Objekten zumindest eine Information zuzuordnen, einer Blickrichtungserfassungseinrichtung zum Erfassen der Blickrichtung eines Beifahrers sowie der Blickrichtung eines Kraftfahrzeugführers als Insassen des Kraftfahrzeugs, insbesondere eines Beifahrers als Insasse des Kraftfahrzeugs, insbesondere in Form zumindest einer Kamera, eines Eye-Tracking Systems, einer Time-of-Flight Kamera oder dergleichen, und einer Anzeigeeinrichtung zum Bereitstellen zumindest einer Anzeige zumindest einer einem vom Beifahrer betrachteten Objekt in der Landschaft zugeordneten Information, wobei die Anzeige in dem durch die erfasste Blickrichtung definierten direkten Blickfeld des zumindest einen Beifahrer an derselben Stelle wie das Objekt bereitstellbar ist, wobei die Bereitstellung der Anzeige in Abhängigkeit davon erfolgt, ob der Kraftfahrzeugführer in der Lage ist, das für den Straßenverkehr relevante Objekt selbst zu sehen.

Dabei kann vorgesehen sein, dass die Positionserfassungseinrichtung in dem Kraftfahrzeug integriert ist oder über ein Smartphone, ein Tablet und/oder einen Personal-Computer bereitgestellt ist, die Objekterfassungseinrichtung in dem Kraftfahrzeug integriert ist oder über ein Smartphone, ein Tablet und/oder einen Personal-Computer bereitgestellt ist, und die Datenverarbeitungseinrichtung in dem Kraftfahrzeug integriert ist oder über ein Smartphone, ein Tablet und/oder einen Personal-Computer bereitgestellt ist.

Ferner wird vorgeschlagen, dass die Anzeigeeinrichtung zum Bereitstellen einer Anzeige, eine Projektionseinrichtung zum Bereitstellen einer Lichtprojektion, insbesondere ein Headup-Display, eine Hologrammeinrichtung zum Bereitstellen einer holographischen Darstellung, ein Leuchtdiodendisplay und/oder ein Flüssigkristalldisplay aufweist.

Auch kann vorgesehen sein, dass die Anzeigeeinrichtung zumindest teilweise in das Material, insbesondere Glasmaterial, einer Windschutzscheibe, einer Seitenscheibe, einer Heckscheibe, eines Dachfensters und/oder eines Panoramafensters des Kraftfahrzeugs oder in eine von dem Insassen getragene Vorrichtung, insbesondere Brille, eingebettet ist.

Zudem wird vorgeschlagen, dass die Anzeigeeinrichtung zumindest teilweise in einer Verkleidung, insbesondere einer Türverkleidung, Deckenverkleidung und/oder Sitzverkleidung und/oder eines Armaturenbretts des Kraftfahrzeugs, eingebettet ist.

Die Anzeigeeinrichtung weist vorzugsweise eine Einrichtung zum Bereitstellen eines Headup-Displays auf. Es ist generell bevorzugt, wenn die Anzeige durch ein Headup-Display bereitgestellt wird, da dieses unaufwändig bereitgestellt werden kann. Vorzugsweise erfolgt die Anzeige auf der Windschutzscheibe, weil ohnehin die Blickrichtung der Fahrzeuginsassen in der Regel auf diese zielt. Ergänzend oder alternativ kann die Anzeige mit einem Headup-Display auch auf einer Seitenscheibe, einer Heckscheibe, einem Dachfenster oder einem Panoramafenster des Kraftfahrzeugs bereitgestellt werden. Das Headup-Display kann ferner zusätzlich oder alternativ auf anderen, insbesondere nicht-transparenten Bauteilen des Kraftfahrzeugs anzeigen, etwa einer Türinnenverkleidung, dem Armaturenbrett oder einem Sitz. Das kann für das Fahrzeug nicht steuernde Insassen sinnvoll sein (z.B. Darstellung auf der Rückseite der vorderen Sitze für Passagiere/ Insassen hinten im Fahrzeug). Aber auch für einen Kraftfahrzeugführer kann dies hilfreich sein, wenn jener nicht durch ein Fenster blickt, Eine Headup-Anzeige kann sich - in Abhängigkeit von der Blickrichtung des Insassen - auch in Teilen über ein Fenster und in anderen Teilen über ein sonstiges Bauteil des Kraftfahrzeugs erstrecken. Außerdem ist die Anzeige statt durch ein Headup-Display mittels einer sonstigen Projektion bereitstellbar, etwa zweidimensional oder unter Nutzung einer holographischen Technik, sowie durch Leuchtdioden (auch organische, OLEDs) oder Flüssigkristalle (LCD-Display) erzielbar. Es können bei einer Anzeige bei der Windschutzscheibe, einem Seitenfenster, einer Heckscheibe oder einem Panoramafenster auch in diesen (Glas-)Körpern integrierte Leuchtmittel genutzt werden, insbesondere so genannte "Seethrough-Displays". Bekannte Techniken hierzu nutzen LCDs sowie anorganische und organische LEDs. Es kann schließlich zusätzlich oder alternativ ein gesondertes Display im Armaturenbrett (Intrumentenpanel) vorgesehen sein oder eine vom Insassen getragene Vorrichtung (etwa: eine Brille) die Anzeige beinhalten, die durch eine Datenverarbeitungseinrichtung des Kraftfahrzeugs steuerbar ist.

Mit der Erfindung wird auch vorgeschlagen, dass die Datenverarbeitungseinrichtung ausgelegt ist, um das erfindungsgemäße Verfahren durchzuführen.

Die Datenverarbeitungseinrichtung kann mit einem Smartphone, Tablet und/oder Personal-Computer verbindbar sein, um Daten zu empfangen und/oder zu senden.

Die Positionserfassungseinrichtung, die Objekterfassungseinrichtung und/oder die Blickrichtungserfassungseinrichtung können zumindest teilweise an oder in einer Rückblickvorrichtung, insbesondere einer Innenrückblickvorrichtung angebracht oder anbringbar sein, und/oder die Blickrichtungserfassungseinrichtung kann aber auch zumindest teilweise in oder an einer Bedienpanele angebracht oder anbringbar sein.

Nachfolgend werden bevorzugte Ausführungsformen der vorliegenden Erfindung unter Bezug auf schematische Zeichnungen näher erläutert, in denen
- Fig. 1: eine Sicht eines Fahrzeuginsassen in einem Kraftfahrzeug zeigt, bei dem das Verfahren gemäß der Erfindung umgesetzt wird;
- Fig. 2: ein Flussschaubild ist, das die Schritte des erfindungsgemäßen Verfahrens generell erläutert;
- Fig. 3: ein Flussschaubild ist, das die Schritte des erfindungsgemäßen Verfahrens in einer für den Fahrzeugführer geeigneten Ausführungsform erläutert; und
- Fig. 4: ein Flussschaubild ist, das die Schritte des erfindungsgemäßen Verfahrens in einer für einen Beifahrer geeigneten Ausführungsform erläutert.

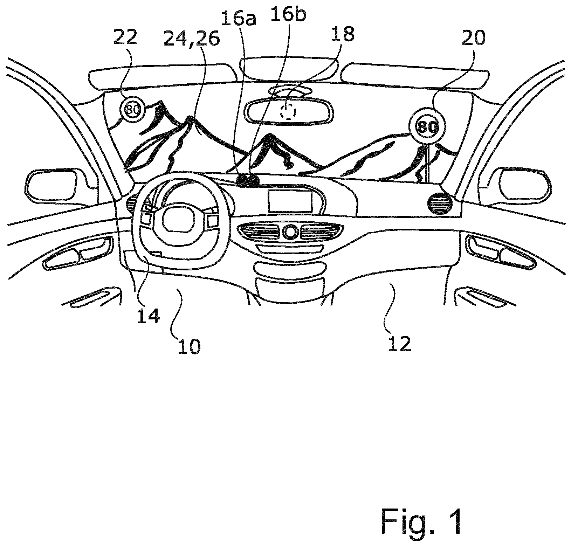

In einem in Fig. 1 aus Sicht der Insassen gezeigten Kraftfahrzeug kann die Erfindung Anwendung für den Insassen finden, und zwar sowohl bei einem auf der Seite 10 als Fahrer sitzenden Insassen als auch bei einem auf der Seite 12 als Beifahrer sitzenden Insassen. Der Fahrer sitzt auf der Seite des Lenkrades 14. Eine Einrichtung 16a nimmt die Augenbewegungen des Fahrers auf (sog. Eye-Tracking), und eine Einrichtung 16b ist zur Aufnahme der Augenbewegungen des Beifahrers vorgesehen. Eine Kamera 18 hinter dem Innenrückspiegel erfasst das Sichtfeld vor dem Kraftfahrzeug. In der Umgebung vor dem Kraftfahrzeug befindet sich ein Verkehrsschild 20, dessen Position durch die Kamera 18 erfassbar und/oder über ein nicht gezeigtes GPS-System bestimmbar ist. Blickt der Fahrer in eine andere Blickrichtung, also nicht auf das Verkehrsschild 20, oder wird durch die Kamera 18 erfasst, dass die Sicht auf das Verkehrsschild 20 blockiert ist, wird dem Fahrer als Headup-Display eine Anzeige 22 gegeben, welche ihm dieselbe Information wie das Verkehrsschild 20 übermittelt. Ein Objekt in der Landschaft, etwa ein Berg 24, wird vom Beifahrer betrachtet, und an selber Stelle wird eine Information 26 zu dem Objekt, beispielsweise dessen Name und Höhe, angegeben.

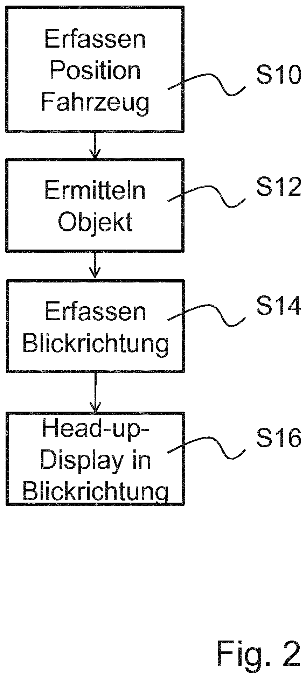

Fig. 2 ist ein Flussschaubild, das die Schritte des erfindungsgemäßen Verfahrens generell erläutert: In Schritt S10 wird, insbesondere mithilfe des GPS-Systems des Kraftfahrzeugs, die Position desselben erfasst. Anhand der Position lassen sich Daten in einem Kartenspeicher im Kraftfahrzeug oder in einem Speicher, auf den drahtlos zugegriffen wird (etwa einem Speicher, der im Internet zur Verfügung steht), zu Objekten in der Umgebung des Kraftfahrzeugs untersuchen und diese Objekte somit ermitteln (Schritt S12). Mithilfe der Einrichtung 16a oder der Einrichtung 16b wird die Blickrichtung des/der Fahrzeuginsassen erfasst (Schritt S14), und in Abhängigkeit von der Blickrichtung in dem Blickfeld des jeweiligen Fahrzeuginsassen eine Anzeige 22, 26 durch ein Headup-Display auf der Windschutzscheibe bereitgestellt.

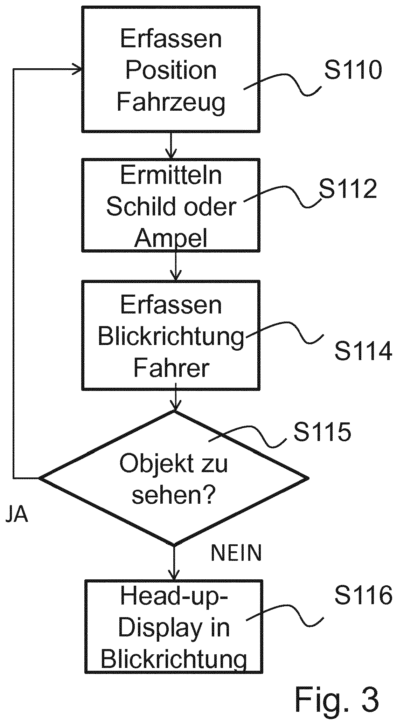

Ist der Fahrzeuginsasse der Fahrer, so wird gemäß Fig. 3 nach Schritt S110 (entspricht S10) in Schritt S112 ermittelt, ob sich beispielsweise ein Verkehrsschild 20 oder eine Ampel in der Umgebung des Kraftfahrzeugs befindet. In Schritt S114 wird mithilfe der Einrichtung 16a die Blickrichtung des Fahrers erfasst. Mithilfe der Kamera 18 und den aus dem Speicher herunterladbaren Positionsdaten wird in Schritt S115 geprüft, ob das Verkehrsschild 20 oder die Ampel überhaupt für den Fahrer sichtbar ist. Zugleich kann geprüft werden, ob der Fahrer dorthin blickt. Falls eines von beiden nicht der Fall ist ("Nein"), wird gemäß Schritt S116 in dem Blickfeld des Fahrers eine Anzeige 22 des Verkehrsschildes 20 oder der Ampel durch das Headup-Display auf der Windschutzscheibe bereitgestellt. Falls der Fahrer das Verkehrsschild 20 oder die Ampel ohnehin ansieht, ist die Anzeige entbehrlich ("Ja", Rückkehr zu Schritt S110).

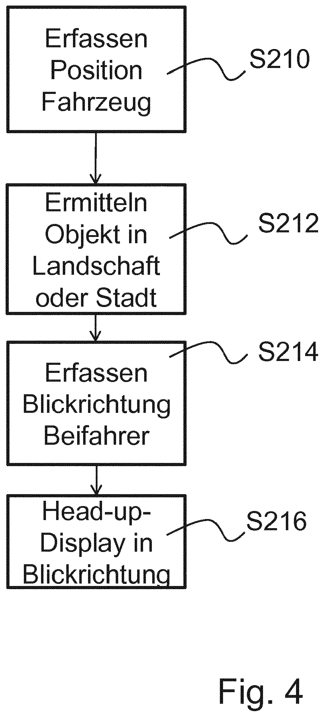

Ist der Fahrzeuginsasse der Beifahrer, so wird gemäß Fig. 4 nach Schritt S210 (entspricht S10) in Schritt S212 ermittelt, welches Landschaftsobjekt 24 (Berg, Gebirgszug, Hügel, Waldstück, Wiese, Weide, Baum, Busch etc.) oder welches Objekt einer Siedlung (Gebäude, Gebäudekomplex, Straße, Denkmal, Brunnen etc.) sich in der Umgebung des Kraftfahrzeugs befindet. In Schritt S214 wird mithilfe der Einrichtung 16b die Blickrichtung des Beifahrers erfasst. So kann zugeordnet werden, auf welches der Objekte der Beifahrer blickt. In dem Blickfeld des Beifahrers wird sodann gemäß Schritt S216 eine Anzeige 26 einer Information zu dem Objekt 24 durch das Headup-Display auf der Windschutzscheibe bereitgestellt.

Hier nicht im Detail erörtert, aber gleichwohl möglich, ist die Anzeige von den Blickrichtungen sowohl des Fahrzeugführers als auch eines weiteren Insassen (des Beifahrers) abhängig zu machen. So kann eine Anzeige etwa in einem Bereich erfolgen, wo sich die Blickfelder von Fahrer und Beifahrer überschneiden. Dies gilt insbesondere für die Bereitstellung von Informationen zu nicht für das Verkehrsgeschehen relevanten Objekten.

Ferner besteht die Möglichkeit, Informationen zu betrachteten Objekten, sei es vom Fahrer oder Beifahrer, durch einen Datenaustausch mit einem Smartphone, Tablet oder Personal-Computer zu erhalten. Auch kann das GPS-System des Kraftfahrzeugs oder vom Smartphone, Tablet oder Personal-Computer genutzt werden.

Beispielsweise kann ein über Bluetooth mit einem Kraftfahrzeug verbundenes Smartphone zur Positionserfassung genutzt werden. Über das Smartphone können zusätzlich in Abhängigkeit von der jeweiligen Position des Kraftfahrzeugs Informationen über Objekte in der Nähe besagter Position erhalten werden. So kann beispielsweise eine App genutzt werden, die automatisch eine Verlinkung mit Wikipedia vornimmt und Texte zu Objekten, die ein Insasse anschaut, anzeigt, wobei die Blickrichtung des Insassen über ein Kamerasystem in dem Innenrückblickspiegel des Kraftfahrzeugs erfasst werden kann.

Anstelle oder zusätzlich zu einer Anzeige von Informationen zu erfassten Objekten ist aber auch eine Tonausgabe möglich, beispielsweise wiederum über das Smartphone. Ferner kann ein Selbstanlemungseffekt genutzt werden, und/oder es können persönliche Prioritäten berücksichtigt werden, und zwar bei der Auswahl der auszugebenden Information. Ist der Insasse beispielsweise an historischen Informationen interessiert, so kann stets die Geschichte zu von ihm angeschauten Objekten bereitgestellt werden, selbst in Form eines Films im Headup-Display. Der Film kann über das Smartphone aus YouTube oder so hochgeladen werden.

Die in der vorstehenden Beschreibung, den Ansprüchen sowie Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

Der Schutzbereich der Erfindung wird durch die Patentansprüche bestimmt.

### Bezugszeichenliste

- 10: Seite des Fahrers
- 12: Seite des Beifahrers
- 14: Lenkrad
- 16a, 16b: Einrichtungen zum Erfassen der Augenbewegung
- 18: Kamera
- 20: Verkehrsschild
- 22: Darstellung zum Verkehrsschild 20
- 24: Objekt in der Landschaft
- 26: Dargestellte Information zum Objekt 24
- S10, S12, S14, S16: Schritte des Verfahrens in seiner allgemeinen Form
- S110, S112, S114, S115, S116: Schritte des Verfahrens in seiner Anwendung auf den Fahrer
- S210, S212, S214, S216: Schritte des Verfahrens in seiner Anwendung auf den Beifahrer

## Patentansprüche

1. Verfahren zum Bereitstellen einer Anzeige in einem Kraftfahrzeug, mit den Schritten:
a) Bestimmen der Position des Kraftfahrzeuges;
b) Ermitteln von zumindest einem Landschaftsobjekt oder Objekt in einer Siedlung als ein nicht für den Straßenverkehr relevanten Objekt (20, 24) als Objekt in einer Landschaft in der Umgebung des Kraftfahrzeuges, in Abhängigkeit von der bestimmten Position, und Ermitteln von zumindest einem für den Straßenverkehr relevanten Objekt, wie ein Verkehrszeichen (20), eine Ampel oder dergleichen;
c) Erfassen zumindest der Blickrichtung eines Beifahrers sowie der Blickrichtung des Kraftfahrzeugführers als Insassen des Kraftfahrzeuges; und
d) Bereitstellen einer Anzeige (22, 26) mit Information zu dem zumindest einen vom Beifahrer betrachteten Objekt (20, 24) in der Landschaft derart, dass sie in dem durch die Blickrichtung definierten direkten Blickfeld des Beifahrers an derselben Stelle wie das Objekt bereitgestellt wird, wobei die Bereitstellung der Anzeige in Abhängigkeit davon erfolgt, ob der Kraftfahrzeugführer in der Lage ist, das für den Straßenverkehr relevante Objekt selbst zu sehen.

2. Verfahren nach Anspruch 1 , **dadurch gekennzeichnet, dass** in Schritt c) auch erfasst wird, ob der Kraftfahrzeugführer in der Lage ist, das Objekt (20) unmittelbar zu sehen.

3. Verfahren nach einem der vorhergehenden Ansprüche, **dadurch gekennzeichnet, dass** ein nicht für den Straßenverkehr relevantes Objekt eine Sehenswürdigkeit oder dergleichen ist, und das Bereitstellen der Anzeige (22) in Schritt d) Informationen zu dem Objekt in Form einer Textanzeige (26) enthält.

4. Verfahren nach Anspruch 3, **dadurch gekennzeichnet, dass** bei Erfassung eines autonomen Fahrens des Fahrzeugs als der Insasse der Kraftfahrzeugführer oder der Kraftfahrzeugführer und der Beifahrer ausgewählt werden kann.

5. Verfahren nach einem der vorhergehenden Ansprüche, **dadurch gekennzeichnet, dass** die mit der Anzeige (22, 26) bereitgestellten Informationen geändert oder angepasst werden können an den Insassen, vorzugsweise selbstlernend.

6. Verfahren nach einem der vorhergehenden Ansprüche, **dadurch gekennzeichnet, dass** vorzugsweise Ort, Dauer und/oder Art, insbesondere bestimmt durch Größe, Farbe, Leuchtkraft, Kontrast und/oder Geometrie, der Anzeige beim Bereitstellen geändert werden kann oder angepasst wird, vorzugsweise selbstlernend.

7. Kraftfahrzeug, mit
- einer Positionserfassungseinrichtung zum Erfassen einer Position des Kraftfahrzeugs, insbesondere in Form einer Einrichtung mit einem Global Positioning System,
- einer Objekterfassungseinrichtung zum Ermitteln von zumindest einem Landschaftsobjekt oder Objekt in einer Siedlung als ein nicht für den Straßenverkehr relevantes Objekt (20, 24) als Objekt in einer Landschaft in der Umgebung des Kraftfahrzeuges und Ermitteln von zumindest einem für den Straßenverkehr relevanten Objekt, wie ein Verkehrszeichen (20), eine Ampel oder dergleichen in Form zumindest einer Kamera (18), eines LIDAR-Systems, eines Radargeräts oder dergleichen,
- einer Datenverarbeitungseinrichtung, die ausgelegt ist, erfassten Objekten (20, 24) eine Information zuzuordnen,
- einer Blickrichtungserfassungseinrichtung (16a, 16b) zum Erfassen der Blickrichtung eines Beifahrers sowie der Blickrichtung eines Kraftfahrzeugführers als Insassen des Kraftfahrzeugs, insbesondere in Form zumindest einer Kamera, eines Eye-Tracking Systems, einer Time-of-Flight Kamera oder dergleichen, und
- einer Anzeigeeinrichtung zum Bereitstellen zumindest einer Anzeige (22, 26) zumindest einer einem vom Beifahrer betrachteten Objekt (20, 24) in der Landschaft zugeordneten Information, wobei die Anzeige (22, 26) in dem durch die erfasste Blickrichtung definierten direkten Blickfeld des zumindest einen Beifahrer an derselben Stelle wie das Objekt (24) bereitstellbar ist, wobei die Bereitstellung der Anzeige in Abhängigkeit davon erfolgt, ob der Kraftfahrzeugführer in der Lage ist, das für den Straßenverkehr relevante Objekt selbst zu sehen.

8. Kraftfahrzeug nach Anspruch 7 , **dadurch gekennzeichnet, dass** die Positionserfassungseinrichtung in dem Kraftfahrzeug integriert ist oder über ein Smartphone, ein Tablet und/oder einen Personal-Computer bereitgestellt ist,
die Objekterfassungseinrichtung in dem Kraftfahrzeug integriert ist oder über ein Smartphone, ein Tablet und/oder einen Personal-Computer bereitgestellt ist, und die Datenverarbeitungseinrichtung in dem Kraftfahrzeug integriert ist oder über ein Smartphone, ein Tablet und/oder einen Personal-Computer bereitgestellt ist.

9. Kraftfahrzeug nach Anspruch 7 oder 8, **dadurch gekennzeichnet, dass** die Anzeigeeinrichtung zum Bereitstellen einer Anzeige, eine Projektionseinrichtung zum Bereitstellen einer Lichtprojektion, insbesondere ein Headup-Display, eine Hologrammeinrichtung zum Bereitstellen einer holographischen Darstellung, ein Leuchtdiodendisplay und/oder ein Flüssigkristalldisplay aufweist.

10. Kraftfahrzeug nach einem der Ansprüche 7 bis 9, **dadurch gekennzeichnet, dass** die Anzeigeeinrichtung zumindest teilweise in das Material, insbesondere Glasmaterial, einer Windschutzscheibe, einer Seitenscheibe, einer Heckscheibe, eines Dachfensters und/oder eines Panoramafensters des Kraftfahrzeugs oder in eine von dem Insassen getragene Vorrichtung, insbesondere Brille, eingebettet ist.

11. Kraftfahrzeug nach einem der Ansprüche 7 bis 10, **dadurch gekennzeichnet, dass** die Anzeigeeinrichtung zumindest teilweise in einer Verkleidung, insbesondere einer Türverkleidung, Deckenverkleidung und/oder Sitzverkleidung und/oder eines Armaturenbretts des Kraftfahrzeugs, eingebettet ist.

12. Kraftfahrzeug nach einem der Ansprüche 7 bis 11, **dadurch gekennzeichnet, dass** die Datenverarbeitungseinrichtung ausgelegt ist, um das Verfahren nach einem der Ansprüche 1 bis 6 durchzuführen.

13. Kraftfahrzeug nach einem der Ansprüche 7 bis 12, **dadurch gekennzeichnet, dass** die Datenverarbeitungseinrichtung mit einem Smartphone, Tablet und/oder Personal-Computer verbindbar ist, um Daten zu empfangen und/oder zu senden.

14. Kraftfahrzeug nach einem der Ansprüche 7 bis 13, **dadurch gekennzeichnet, dass** die Positionserfassungseinrichtung, die Objekterfassungseinrichtung und/oder die Blickrichtungserfassungseinrichtung zumindest teilweise an oder in einer Rückblickvorrichtung, insbesondere einer Innenrückblickvorrichtung angebracht oder anbringbar ist, und/oder
die Blickrichtungserfassungseinrichtung zumindest teilweise in oder an einer Bedienpanele angebracht oder anbringbar ist.

## Claims

1. A method for providing a display in a motor vehicle, having the steps of:
a) determining the position of the motor vehicle;
b) establishing at least one landscape object or object in a settlement as an object (20, 24) not relevant to road traffic as an object in a landscape in the surroundings of the motor vehicle, depending on the determined position, and establishing at least one object relevant to road traffic such as a traffic sign (20), a traffic light or the like;
c) detecting at least the direction of view of a passenger as well as the direction of view of the motor vehicle operator as occupants of the motor vehicle; and
d) providing a display (22, 26) with information about the at least one object (20, 24) in the landscape viewed by the passenger such that said information is provided in the direct field of view of the passenger, which is defined by the direction of view, at the same location as the object, wherein the display is provided depending on whether the motor vehicle operator is able to see the object relevant to road traffic himself.

2. The method according to Claim 1, **characterized in that**, in step c), it is also detected whether the motor vehicle operator is able to see the object (20) directly.

3. The method according to any one of the preceding claims, **characterized in that** an object not relevant to road traffic is a tourist attraction or the like, and the provision of the display (22) in step d) contains information about the object in the form of a text display (26).

4. The method according to Claim 3, **characterized in that** if autonomous driving of the vehicle is detected, the motor vehicle operator or the motor vehicle operator and the passenger can be selected as the occupant(s).

5. The method according to any one of the preceding claims, **characterized in that** the information provided with the display (22, 26) can be changed or adapted to the occupant, preferably in a self-learning manner.

6. The method according to any one of the preceding claims, **characterized in that** preferably the location, duration and/or type, in particular determined by size, color, luminosity, contrast and/or geometry, of the display can be changed or adapted when provided, preferably in a self-learning manner.

7. A motor vehicle, having
- a position detection device for detecting a position of the motor vehicle, in particular in the form of a device having a global positioning system,
- an object detection device for establishing at least one landscape object or object in a settlement as an object (20, 24) not relevant to road traffic as an object in a landscape in the surroundings of the motor vehicle and establishing at least one object relevant to road traffic, such as a traffic sign (20), a traffic light or the like in the form of at least one camera (18), a LIDAR system, a radar set or the like,
- a data processing device which is designed to assign a piece of information to detected objects (20, 24),
- a direction of view detection device (16a, 16b) for detecting the direction of view of a passenger as well as the direction of view of a motor vehicle operator as occupants of the motor vehicle, in particular in the form of at least one camera, an eye-tracking system, a time-of-flight camera or the like, and
- a display device for providing at least one display (22, 26) of at least one piece of information assigned to an object (20, 24) in the landscape viewed by the passenger, wherein the display (22, 26) can be provided in the direct field of view of the at least one passenger, which is defined by the detected direction of view, at the same location as the object (24), wherein the display is provided depending on whether the motor vehicle operator is able to see the object relevant to road traffic himself.

8. The motor vehicle according to Claim 7, **characterized in that** the position detection device is integrated in the motor vehicle or is provided via a smartphone, a tablet and/or a personal computer, the object detection device is integrated in the motor vehicle or is provided via a smartphone, a tablet and/or a personal computer, and the data processing device is integrated in the motor vehicle or is provided via a smartphone, a tablet and/or a personal computer.

9. The motor vehicle according to Claim 7 or 8, **characterized in that** the display device for providing a display has a projection device for providing a light projection, in particular a head-up display, a hologram device for providing a holographic representation, a light-emitting diode display and/or a liquid-crystal display.

10. The motor vehicle according to any one of Claims 7 to 9, **characterized in that** the display device is at least partially embedded in the material, in particular glass material, of a windshield, a side window, a rear window, a sunroof and/or a panoramic window of the motor vehicle or in an apparatus, in particular spectacles, worn by the occupant.

11. The motor vehicle according to any one of Claims 7 to 10, **characterized in that** the display device is at least partially embedded in a cladding, in particular a door cladding, roof cladding and/or seat cladding and/or a dashboard of the motor vehicle.

12. The motor vehicle according to any one of Claims 7 to 11, **characterized in that** the data processing device is designed to carry out the method according to any one of Claims 1 to 6.

13. The motor vehicle according to any one of Claims 7 to 12, **characterized in that** the data processing device can be connected to a smartphone, tablet and/or personal computer in order to receive and/or send data.

14. The motor vehicle according to any one of Claims 7 to 13, **characterized in that** the position detection device, the object detection device and/or the direction of view detection device is or can be at least partially mounted on or in a rear-view apparatus, in particular an interior rear-view apparatus, and/or
the direction of view detection device is or can be at least partially mounted in or on a control panel.

## Revendications

1. Procédé destiné à fournir un affichage dans un véhicule à moteur, comprenant les étapes suivantes :
a) définition de la position du véhicule à moteur ;
b) détermination d'au moins un objet de paysage ou objet dans une zone urbaine comme un objet non important pour la circulation routière (20, 24) comme objet dans un paysage dans l'environnement du véhicule à moteur, en fonction de la position définie, et détermination d'au moins un objet important pour la circulation routière, tel un panneau de signalisation routière (20), un feu de circulation ou similaire ;
c) détection au moins de la direction du regard d'un passager ainsi que de la direction du regard du conducteur de véhicule à moteur en tant qu'occupants du véhicule à moteur ; et
d) fourniture d'un affichage (22, 26) avec des informations relatives à l'au moins un objet observé par le passager (20, 24) dans le paysage de telle sorte qu'il est fourni à la même place que l'objet dans le champ visuel direct du passager qui est défini par la direction du regard, la fourniture de l'affichage étant effectuée en fonction du fait que le conducteur de véhicule à moteur est en mesure de voir lui-même l'objet important pour la circulation routière.

2. Procédé selon la revendication 1, **caractérisé en ce que**, à l'étape c), il est également détecté si le conducteur de véhicule à moteur est en mesure de voir directement l'objet (20).

3. Procédé selon l'une quelconque des revendications précédentes, **caractérisé en ce qu'**un objet non important pour la circulation routière est une attraction touristique ou similaire, et la fourniture de l'affichage (22) à l'étape d) contient des informations relatives à l'objet sous la forme d'un affichage de texte (26).

4. Procédé selon la revendication 3, **caractérisé en ce que**, lors de la détection d'une conduite autonome du véhicule, le conducteur de véhicule à moteur ou le conducteur de véhicule à moteur et le passager peut être choisi comme occupant.

5. Procédé selon l'une quelconque des revendications précédentes, **caractérisé en ce que** les informations fournies avec l'affichage (22, 26) peuvent être modifiées ou adaptées aux occupants, de préférence sous la forme d'un auto-apprentissage.

6. Procédé selon l'une quelconque des revendications précédentes, **caractérisé en ce que** de préférence le lieu, la durée et/ou le mode, en particulier défini par la taille, la couleur, la luminosité, le contraste et/ou la géométrie, de l'affichage peut être modifié(e) ou est adapté(e) lors de la fourniture, de préférence sous la forme d'un auto-apprentissage.

7. Véhicule à moteur avec
- un moyen de détection de position destiné à détecter une position du véhicule à moteur, en particulier sous la forme d'un moyen avec un système de localisation GPS (*Global Positioning System),*
- un moyen de détection d'objet destiné à déterminer au moins un objet de paysage ou objet dans une zone urbaine comme un objet (20, 24) non important pour la circulation routière comme objet dans un paysage dans l'environnement du véhicule à moteur et déterminer au moins un objet important pour la circulation routière, tel un panneau de signalisation routière (20), un feu de circulation ou similaire, sous la forme d'au moins une caméra (18), un système LIDAR, un système radar ou similaire,
- un moyen de traitement de données, qui est conçu pour associer une information à des objets détectés (20, 24),
- un moyen de détection de direction de regard (16a, 16b) destiné à détecter la direction du regard d'un passager ainsi que la direction du regard d'un conducteur de véhicule à moteur en tant qu'occupant du véhicule à moteur, en particulier sous la forme d'au moins une caméra, un système de suivi oculaire (*eye tracking*), une caméra à temps de vol (*time of flight*) ou similaire, et
- un moyen d'affichage destiné à fournir au moins un affichage (22, 26) d'au moins une information associée à un objet (20, 24) observé par le passager dans le paysage, dans lequel l'affichage (22, 26) peut être fourni à la même place que l'objet (24) dans le champ visuel direct de l'au moins un passager qui est défini par la direction du regard détectée, la fourniture de l'affichage étant effectuée en fonction du fait que le conducteur de véhicule à moteur est en mesure de voir lui-même l'objet important pour la circulation routière.

8. Véhicule à moteur selon la revendication 7, **caractérisé en ce que** le moyen de détection de position est intégré dans le véhicule à moteur ou est fourni par le biais d'un téléphone intelligent (*smartphone*)*,* une tablette et/ou un ordinateur personnel (*personal computer*), le moyen de détection d'objet est intégré dans le véhicule à moteur ou est fourni par le biais d'un téléphone intelligent, une tablette et/ou un ordinateur personnel, et le moyen de traitement de données est intégré dans le véhicule à moteur ou est fourni par le biais d'un téléphone intelligent, une tablette et/ou un ordinateur personnel.

9. Véhicule à moteur selon la revendication 7 ou 8, **caractérisé en ce que** le moyen d'affichage destiné à fournir un affichage présente un moyen de projection pour fournir une projection de lumière, en particulier un affichage à tête haute (*headup display*), un moyen holographique pour fournir une représentation holographique, un écran à diodes électroluminescentes et/ou un écran à cristaux liquides.

10. Véhicule à moteur selon l'une quelconque des revendications 7 à 9, **caractérisé en ce que** le moyen d'affichage est encastré au moins en partie dans le matériau, en particulier le matériau en verre, d'un parebrise, d'une vitre latérale, d'une vitre arrière, d'une fenêtre de toit et/ou d'une fenêtre panoramique du véhicule à moteur ou dans un dispositif porté par l'occupant, en particulier des lunettes.

11. Véhicule à moteur selon l'une quelconque des revendications 7 à 10, **caractérisé en ce que** le moyen d'affichage est encastré au moins en partie dans un revêtement, en particulier un habillage de porte, un revêtement de plafond et/ou un revêtement de siège, et/ou un tableau de bord du véhicule à moteur.

12. Véhicule à moteur selon l'une quelconque des revendications 7 à 11, **caractérisé en ce que** le moyen de traitement de données est conçu pour réaliser le procédé selon l'une quelconque des revendications 1 à 6.

13. Véhicule à moteur selon l'une quelconque des revendications 7 à 12, **caractérisé en ce que** le moyen de traitement de données peut être relié à un téléphone intelligent, une tablette et/ou un ordinateur personnel pour recevoir et/ou envoyer des données.

14. Véhicule à moteur selon l'une quelconque des revendications 7 à 13, **caractérisé en ce que** le moyen de détection de position, le moyen de détection d'objet et/ou le moyen de détection de direction de regard est appliqué ou peut être appliqué au moins en partie sur ou dans un dispositif de rétrovision, en particulier un dispositif de rétrovision intérieur, et/ou le moyen de détection de direction de regard est appliqué ou peut être appliqué au moins en partie dans ou sur un pupitre de commande.
